# EUROPÄISCHE PATENTSCHRIFT

(11) **EP 1 955 965 B1**
(45) Veröffentlichungstag und Bekanntmachung des Hinweises auf die Patenterteilung: **10.10.2012**
(21) Anmeldenummer: 08101200.7
(22) Anmeldetag: 01.02.2008
(51) Int. Cl.: B65D 55/02, G09F 3/02

(54) **Sicherheitsetikett**
Safety sticker
Etiquette de sécurité

(30) Priorität: 12.02.2007 DE 102007007413
(43) Veröffentlichungstag der Anmeldung: 13.08.2008
(73) Patentinhaber: TESA SE, 20253 Hamburg (DE)
(72) Erfinder: Tuffe, David, 215021 Suzhou, Jiangsu (HK); Escudero Vallejo, Aranzazu, 20255 Hamburg (DE); Dollase, Thilo, Dr., 22397, Hamburg (DE)

(56) Entgegenhaltungen:
- EP-A- 0 563 272
- EP-A- 1 225 554
- DE-C1- 19 653 891
- US-A- 4 024 312
- US-A1- 2005 230 961
- US-B1- 6 372 341

## Beschreibung

Die vorliegende Erfindung betrifft ein Sicherheitsetikett zur Verwendung als Erstöffnungsnachweis.

Sicherheitsetiketten werden üblicherweise dazu verwendet, die Erstöffnung eines mit dem Sicherheitsetikett gekennzeichneten Gegenstandes, wie einer Tür oder einer Box, anzuzeigen. Dazu weisen derartige Sicherheitsetiketten ein optisches Merkmal auf, das einen Öffnungsversuch, wie ein Ablösen von dem mit dem Sicherheitsetikett versehenen Gegenstand, irreversibel anzeigt. Die Sicherheitsetiketten dienen insofern als Siegel für die Unversehrtheit des Gegenstandes vor Erstöffnung. Das Sicherheitsetikett wird hierzu auf den Gegenstand derart aufgeklebt, dass dieser ohne ein Ablösen oder Zerschneiden des Sicherheitsetiketts nicht geöffnet werden kann. Hierzu muss das Sicherheitsetikett derart mit dem Gegenstand verbunden sein, dass ein Ablösen und anschließendes Wiederaufbringen nicht ohne sichtbare Beeinträchtigungen möglich ist. Dies wird üblicherweise durch eine geeignete Klebeverbindung mit dem Gegenstand in Kombination mit einem optischen Merkmal erreicht. Der Begriff "Sicherheitsetikett" umfasst vorliegend sowohl Ausgestaltungen mit begrenzten Abmessungen wie Stanzlinge, als auch bandförmige Ausgestaltungen, wie Klebebänder.

Derartige Sicherheitsetiketten sind aus dem Stand der Technik bekannt (WO 97/44769 A1; EP 0 205 457 B1). Sicherheitsetiketten sind kommerziell verfügbar wie z. B. unter der Produktbezeichnung tesa® SecuritySeal. Sicherheitsetiketten können so aufgebaut sein, dass sie einen Schichtaufbau mit unterschiedlich stark aneinander haftenden Schichten aufweisen. Dieser Schichtaufbau ist vor einem ersten Ablöseversuch mit dem bloßen Auge üblicherweise nicht zu erkennen. Bei einem Ablöseversuch wird der Schichtaufbau jedoch aufgrund der unterschiedlichen Klebkräfte zerstört, so dass eine sichtbare Beeinträchtigung des Sicherheitsetiketts bestehen bleibt, die auch nicht durch ein Wiederverkleben der betroffenen Schichten rückgängig gemacht werden kann. Die Beeinträchtigung kann beispielsweise darin bestehen, dass durch das Ablösen einzelner Schichten ein Schriftzug erkennbar wird.

Problematisch bei derartigen Sicherheitsetiketten ist das rückstandsfreie Ablösen eines einmal verwendeten Sicherheitsetiketts von dem Gegenstand. Dieses ist oftmals nur mit hohem mechanischem Aufwand oder unter Einsatz von Lösemitteln möglich. Beides ist aufgrund der hohen Personalkosten und wegen der bei der Reinigung auftretenden Beeinträchtigung Oberfläche des Gegenstandes oft unerwünscht.

Gesucht sind daher Sicherheitsetiketten, die einerseits als Erstöffnungsnachweis fungieren, andererseits aber rückstandsfrei wiederablösbar sind. Rückstandsfrei wiederablöse Selbstklebestreifen sind an sich bekannt. Aus dem Stand der Technik sind beispielsweise Klebestreifen bekannt, die durch ein Verstrecken, das auch als "Strippen" bezeichnet wird, im wesentlichen rückstandsfrei wiederablösbar sind (US 4,024,312; EP 0 563 272 B1). Als Beispiel für kommerziell erhältliche Produkte seien tesa® Power Strips® genannt. Diese unterschiedlichen Klebestreifen haben als Gemeinsamkeit, dass die dort verwendeten Haftklebemassen eine ungewöhnlich hohe Kohäsivität und Dehnbarkeit aufweisen, wodurch das Verstrecken ermöglicht wird.

Aus dem Stand der Technik (US 6,372,341 B1) ist zudem ein Sicherheitsetikett bekannt, das sowohl einen Öffnungsversuch irreversibel anzeigt, als auch durch Strippen rückstandsfrei von dem Verklebungsuntergrund abgelöst werden kann. Dieses Sicherheitsetikett löst insofern das Problem der rückstandsfreien Entfernung vom Verklebungsuntergrund. Um das Strippen und damit das rückstandsfreie Ablösen des Sicherheitsetiketts von dem Gegenstand zu ermöglichen, muss dieses eine hohe Reißfestigkeit aufweisen. Die hohe Reißfestigkeit hat allerdings zur Folge, dass das Klebeband vor dem Öffnen des versiegelten Gegenstandes erst zerschnitten oder von dem Gegenstand abgelöst werden muss. Ein weiteres Problem besteht darin, dass durch die Trennung der verschiedenen Schichten des Sicherheitsetiketts beim Ablösen Produktfetzen der einzelnen Schichten entstehen können, die unkontrolliert entgleiten und beispielsweise in Luftkanäle oder Fugen geraten können. Die Kontrolle solcher Produktfetzen ist insbesondere unter widrigen Bedingungen wie Dunkelheit oder Luftzug schwierig. Der vorliegenden Erfindung liegt daher das Problem zugrunde, ein Sicherheitsetikett anzugeben, das nicht nur als Erstöffnungsnachweis fungieren kann und sich rückstandsfrei wiederablösen lässt, sondern das zudem hinsichtlich einer einfachen Handhabung optimiert ist.

Die vorliegende Erfindung löst dieses Problem bei einem Sicherheitsetikett mit den Merkmalen des Oberbegriffs von Anspruch 1 durch die Merkmale des kennzeichnenden Teils von Anspruch 1. Eine nebengeordnete Lösung stellt ein Sicherheitsetikett gemäß Anspruch 5 bereit. Ein Erfindungsgemäßes Verfahren zum im Wesentlichen rückstandsfreien Ablösen eines Sicherheitsetiketts ist in Anspruch 13 beschrieben. Bevorzugte Weiterbildungen sind Gegenstand der jeweiligen Unteransprüche.

Erfindungsgemäß ist erkannt worden, dass es nicht immer notwendig oder möglich ist, das Sicherheitsetikett vor dem Öffnen des mit dem Etikett gesicherten Gegenstandes zu entfernen. Wegen der hohen Reißfestigkeit ist dies bei dem aus dem Stand der Technik bekannten Sicherheitsetikett jedoch zwingend erforderlich. Das erfindungsgemäße Sicherheitsetikett weist daher in einer bevorzugten Auslegung eine Sollbruchstelle auf, an der das Sicherheitsetikett bei Erstöffnung in zum Beispiel zwei Teile trennbar ist. Damit ist es möglich, den Gegenstand ohne großen Kraftaufwand auch bei noch verklebtem Sicherheitsetikett zu öffnen. Das Sicherheitsetikett wird beim Vorgang des Öffnens selbst an der Sollbruchstelle in zwei Teile zerteilt, die dabei jeweils mit dem Gegenstand noch verbunden bleiben, es entstehen somit keine Produktfetzen, die unkontrolliert entgleiten können. Das rückstandsfreie Entfernen des Sicherheitsetiketts von dem Gegenstand bleibt allerdings möglich, da die beiden Teile jeweils unabhängig voneinander durch Strippen von dem Gegenstand ablösbar sind.

Bei einer alternativen, nebengeordneten Lösung gemäß Anspruch 5, weist das Sicherheitsetikett ein Rückstellvermögen von mindestens 50% auf und wird das Sicherheitsetikett bereits durch den Öffnungsvorgang selbst jedenfalls zumindest an einer Seite zumindest partiell, bevorzugt vollständig von dem Gegenstand durch Strippen abgelöst. Durch den Öffnungsvorgang des Gegenstandes, beispielsweise einer Tür, wird also der Stripvorgang eingeleitet, und bei entsprechend weiter Öffnung des Gegenstandes auch abgeschlossen. Das Sicherheitsetikett ist sodann von der zweiten Seite besonders einfach abzulösen, da die erste Seite des Sicherheitsetiketts als Anfasser für das weitere Strippen dienen kann.

Das erfindungsgemäße Sicherheitsetikett weist eine Klebeschicht auf, mittels der es auf dem zu kennzeichnenden Gegenstand festlegbar ist. Ferner ist eine Nachweisschicht vorgesehen, die einen Ablöseversuch irreversibel anzeigt. Bei der Nachweisschicht kann es sich um eine einzelne Schicht handeln, sie kann aber auch, wie es aus dem Stand der Technik bekannt ist, aus mehreren Schichten aufgebaut sein. Wesentlich ist, dass die Nachweisschicht ein optisches Merkmal aufweist, durch das ein Ablösen, auch ein teilweises Ablösen, des Sicherheitsetiketts von dem Gegenstand irreversibel angezeigt wird. Um ein im Wesentlichen rückstandsfreies Entfernen des Sicherheitsetiketts von dem Gegenstand nach Erstverklebung zu ermöglichen, ist das Sicherheitsetikett strippbar. Hierzu weist es eine Dehnbarkeit von mindestens 50 %, vorzugsweise von mindestens 100 %, weiter vorzugsweise von mindestens 500 % auf. Die Dehnbarkeit kann insbesondere dadurch gewährleistet werden, dass die Nachweisschicht dehnbar ausgebildet ist. Es können aber auch weitere Schichten, wie zum Beispiel eine Trägerschicht, vorgesehen sein, die dehnbar ausgebildet sind. Dehnbarkeit des Sicherheitsetiketts bedeutet aber auch, dass nicht alle Schichten des Sicherheitsetiketts die Dehnung nachvollziehen müssen, es können beim Dehnen durchaus auch einzelne Schichten zerstört werden. Wichtig ist lediglich, dass das Sicherheitsetikett als solches die Dehnbarkeit aufweist und bei der Dehnung zusammenhängend bleibt, da über die Dehnung des Sicherheitsetiketts das im Wesentlichen rückstandsfreie Wiederablösen vom Verklebungsuntergrund erreicht wird. Unter dem Begriff der Dehnbarkeit wird dabei die maximale Dehnung verstanden, die ein Prüfmuster erreicht. Die Dehnbarkeit bezieht sich zudem auf die Bereiche des Sicherheitsetiketts, in denen gerade keine Sollbruchstelle vorgesehen ist.

Die Sollbruchstelle kann beispielsweise in Form einer mechanischen Vorbeanspruchung des Sicherheitsetiketts an dieser Stelle oder in einem größeren Bereich des Sicherheitsetiketts vorgesehen sein, sie kann aber auch dadurch gebildet sein, dass das Sicherheitsetikett selbst an der entsprechenden Stelle oder in einem größeren Bereich aufgrund des Schichtaufbaus oder der chemischen Zusammensetzung der Schichten entsprechend schwächer ausgelegt ist, also in diesem Bereich gerade keine hohe Reißfestigkeit, wie es aus dem Stand der Technik bekannt ist, aufweist. In diesem Sinne kann man sich beispielsweise einen verjüngten Bereich des erfindungsgemäßen Sicherheitsetiketts als Sollbruchstelle vorstellen.

Auf besonders einfache Weise lässt sich eine Sollbruchstelle in das Sicherheitsetikett einbringen, indem dieses eine Anstanzung und/oder eine Perforation aufweist. Die Anstanzung und/oder Perforation kann auf verschiedenste Art und Weise ausgebildet sein. Sie kann beispielsweise lokal vorgesehen sein oder sich über einen größeren Bereich erstrecken, es können mehrere Anstanzungen und/oder Perforationen vorgesehen sein und/oder die Gestalt der Anstanzungen und/oder Perforationen kann variiert sein.

In besonders bevorzugter Ausgestaltung ist der Bereich, in dem die Sollbruchstelle angeordnet ist, gekennzeichnet, um bereits beim Aufbringen des Sicherheitsetiketts auf den zu kennzeichnenden Gegenstand darauf zu achten, dass die Sollbruchstelle möglichst über dem beim Öffnen des Gegenstandes entstehenden Spalt angeordnet ist, bei einer Tür also über dem Türschlitz. Durch eine solche Anordnung der Sollbruchstelle kann diese ihre Funktion bestmöglich erfüllen, da diese Stelle des Sicherheitsetiketts bei der Erstöffnung des Gegenstandes am stärksten belastet wird.

Weiter bevorzugt ist es, wenn das Sicherheitsetikett derart ausgebildet ist, dass es ausschließlich von der Sollbruchstelle aus durch Verstrecken im Wesentlichen rückstandsfrei von dem Gegenstand entfernbar ist. Dies hat zur Folge, dass das Sicherheitsetikett erst nach dem Öffnen des Gegenstandes und somit nach dem Bruch der Sollbruchstelle rückstandsfrei von dem Gegenstand entfernbar ist. Dadurch wird eine äußere Manipulation unabhängig von dem eigentlichen optischen Merkmal, das eine solche Manipulation anzeigt, zusätzlich erschwert.

In bevorzugter Ausgestaltung ist vorgesehen, dass die Sollbruchstelle derart ausgebildet ist, dass das Sicherheitsetikett mit einer möglichst geringen zusätzlichen Kraft in zwei Teile trennbar ist. Der Ausdruck "zusätzliche Kraft" kennzeichnet die Kraft, die zusätzlich zu der sowieso erforderlichen Kraft zum Öffnen des Gegenstandes aufgebracht werden muss. Andererseits ist diese zusätzliche Kraft so eingestellt, dass ein unbeabsichtigtes Reißen des Sicherheitsetiketts verhindert wird.

Über die mechanischen Eigenschaften der erfindungsgemäßen Sicherheitsetiketten lässt sich zudem derjenige Moment wunschgemäß einstellen, an dem das zumindest eine optische Merkmal auslöst und damit den Erstöffnungsversuch anzeigt. Dieser Moment ist mit einer Mindestdehnung des Etiketts verknüpft und hängt von der Art des optischen Merkmals ab, das zum Einsatz kommt.

Im Allgemeinen kann zwischen zwei Grenzfällen in den diesbezüglichen Anforderungen unterschieden werden. Erfindungsgemäße Sicherheitsetiketten bieten in zwei vorteilhaften Gestaltungsformen jeweils einen Lösungsvorschlag für beide Fälle.

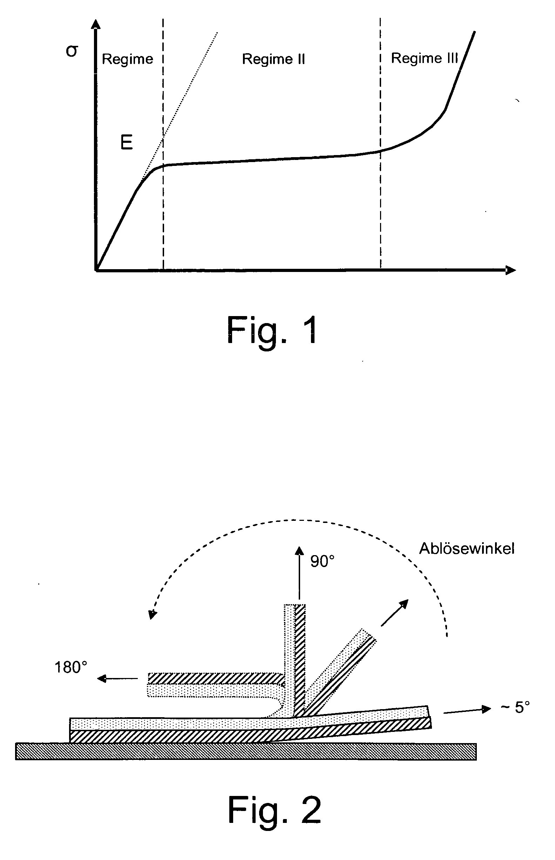

Auf der einen Seite kann es sinnvoll sein, die Kraft, die erforderlich ist, um die oben genannte Mindestdehnung zu erreichen, möglichst gering einzustellen. Erfindungsgemäße Sicherheitsetiketten dieser ersten vorteilhaften Auslegung weisen ein Young-Modul kleiner etwa 100 MPa, vorzugsweise kleiner etwa 50 MPa, weiter vorzugsweise kleiner etwa 20 MPa, insbesondere kleiner etwa 15 MPa auf. Ein möglichst kleines Young-Modul hat den Vorteil, dass eine geringere Kraft erforderlich ist, um die für das Auslösen des optischen Merkmals erforderliche Mindestdehnung zu erreichen. Das Sicherheitsetikett reagiert damit auf vorteilhafte Art besonders empfindlich auf Manipulationsversuche. Der Young-Modul gibt den mechanischen Widerstand an , den ein Werkstoff einer elastischen Verformung entgegensetzt. Es wird bestimmt als das Verhältnis der erforderlichen Spannung σ zur erzielten Dehnung ε wobei ε der Quotient aus der Längenänderung ΔL und der Länge L₀ ist. Die Definition des Young-Moduls ist beispielsweise im Taschenbuch der Physik erläutert [H. Stöcker (Hrsg.), Taschenbuch der Physik, 2. Aufl., 1994, Verlag Harri Deutsch, Frankfurt]. Da das mechanische Verhalten der Sicherheitsetiketten von zentraler Bedeutung für die erfindungsgemäße Funktion ist, führt Fig. 1 den typischen Verlauf einer Zug/Dehnungs-Kurve vor Augen, wie er qualitativ für erfindungsgemäße Sicherheitsetiketten vorteilhaft ist. Von Bedeutung sind hier insbesondere Regime I und II. Regime I definiert dabei die Kraft, die erforderlich ist, um das Sicherheitsetikett in merklicher Weise zu dehnen, während Regime II beschreibt, in welchem Maße und bei welcher Kraft das Sicherheitsetikett dehnbar ist, bevor es reißt. Der Kurvenverlauf in Regime III ist von der Reißfestigkeit des Sicherheitsetiketts geprägt.

Andererseits kann es gewünscht sein, die Kraft, die erforderlich ist, um die weiter oben genannte Mindestdehnung zu erreichen, hoch einzustellen. In dieser zweiten vorteilhaften Ausgestaltung weist das Sicherheitsetikett ein möglichst hohes Young-Modul auf. Dieses sollte größer etwa 300 MPa sein, vorzugsweise größer etwa 400 MPa, weiter vorzugsweise größer etwa 500 MPa. In einer solchen Erfindungsauslegung bietet das Sicherheitsetikett eine hohe Resistenz gegen unbeabsichtigtem oder selbstständigem Öffnen des Verschlusses und/oder Auslösen des optischen Merkmals, was beispielsweise durch Verwindungen von Klappen oder durch Vibrationen während eines Transports auftreten kann. Diese Auslegung schlägt also eine Lösung für ein Sicherheitsetikett vor, von dem eine hohe Robustheit erwartet wird.

Auch wenn sich erfindungsgemäße Sicherheitsetiketten im Winkelbereich zwischen 180° und 90° ablösen lassen, ist das rückstandsfreie Entfernen von dem Gegenstand durch Verstrecken in bevorzugter Ausgestaltung unter einem Winkel zwischen 0° und 90° möglich, wie auch in Fig. 2 verdeutlicht ist. Die aus dem Stand der Technik bekannten Klebeartikel, die durch Strippen abgelöst werden, ermöglichen einen derart großen Winkel zum rückstandsfreien Ablösen in der Regel nicht, wodurch die Handhabung des Sicherheitsetiketts beim Ablösen unnötig erschwert wird (EP 0 563 272 B1).

Ferner weist das Sicherheitsetikett mit Sollbruchstelle in bevorzugter Ausgestaltung ein Rückstellvermögen von mindestens 30%, vorzugsweise von mindestens 50% auf. Ein möglichst hohes Rückstellvermögen erleichtert das rückstandsfreie Ablösen des Sicherheitsetiketts auch bei hohen Klebkräften. Das Rückstellvermögen beschreibt die Fähigkeit der sofortigen Rückstellung (in Prozent) nach einer Längsdehnung um 50% der Ausgangslänge und anschließender Entlastung. Das Rückstellvermögen ist eine Funktion des zurückgestellten Anteils über den insgesamt gedehnten Anteil. Der gedehnte Anteil entspricht dabei der Länge der gedehnten Probe abzüglich der originalen Länge. Der zurückgestellte Anteil entspricht dabei der Länge im gedehnten Zustand abzüglich der Länge nach Rückstellung. Ein Verfahren zur Bestimmung des Rückstellvermögens ist beispielsweise in der US 4,024,312 beschrieben.

Erfindungsgemäße Sicherheitsetiketten enthalten zumindest eine Schicht eines Klebstoffs. Diese Klebeschicht ist sehr bevorzugt haftklebrig. Optional aber sehr vorteilhaft kommt als eine weitere Schicht ein bevorzugt nichtklebendes Trägermaterial zum Einsatz. Erfindungsgemäße Selbstklebeetiketten enthalten zudem zumindest eine Schicht, die zumindest ein optisches Merkmal enthält, das unter Verstreckung sein Erscheinungsbild ändert - die Nachweisschicht. Die Klebeschicht kann zudem auf einer Seite mit einem trennenden Trägermaterial (Liner) eingedeckt sein , von dem das Sicherheitsetikett vor der Verklebung auf dem gewünschten Substrat abgelöst wird. Auf der zweiten Seite trägt die Klebeschicht zumindest eine nichtklebende Schicht. Diese nichtklebende Schicht kann einerseits obengenannte Trägerschicht sein oder aber andererseits direkt die zumindest eine Nachweisschicht, die das optische Merkmal aufweist, das unter Verstreckung sein Erscheinungsbild ändert.

Die Klebeschicht besteht vorteilhaft aus einer Haftklebemassenformulierung. Als Haftklebemassen können insbesondere alle linearen, sternförmigen, verzweigten, gepfropften oder andersartig gestalteten Polymere, bevorzugt Homopolymere, statistische Copolymere oder Blockcopolymere, zum Einsatz kommen, die eine Molmasse von mindestens 100 000 g/mol, bevorzugt von mindestens 250 000 g/mol, sehr bevorzugt von mindestens 500 000 g/mol aufweisen. Bevorzugt wird außerdem zumindest eine Erweichungstemperatur von kleiner als 0 °C, bevorzugt von kleiner als - 30 °C. Als Molmasse ist in diesem Zusammenhang das Gewichtsmittel der Molmassenverteilung, wie sie beispielsweise über gelpermeationschromatographische Untersuchungen zugänglich ist, zu verstehen. Unter Erweichungstemperatur sei in diesem Zusammenhang die quasistatische Glasübergangstemperatur für amorphe Systeme und die Schmelztemperatur für semikristalline Systeme verstanden, die beispielsweise durch dynamisch differentialkalorimetrische Messungen bestimmt werden können. Sind Zahlenwerte für Erweichungstemperaturen angegeben, dann beziehen sich diese bei amorphen Systemen auf die Mittelpunktstemperatur der Glasstufe und bei semikristallinen Systemen auf die Temperatur bei maximaler Wärmetönung während des Phasenübergangs.

Als Haftklebemassen können alle dem Fachmann bekannten Haftklebemassen, insbesondere Acrylat-, Naturkautschuk-, Synthesekautschuk- oder Ethylenvinylacetatbasierende Systeme eingesetzt werden. Auch Kombinationen dieser Systeme sind erfindungsgemäß einsetzbar.

Als Beispiele, aber ohne eine Einschränkung vornehmen zu wollen, seien als vorteilhaft im Sinne dieser Erfindung statistische Copolymere ausgehend von unfunktionalisierten α,β-ungesättigten Estern und statistische Copolymere ausgehend von unfunktionalisierten Alkylvinylethern genannt. Bevorzugt werden α,β-ungesättigte Alkylester der allgemeinen Struktur

CH₂=CH(R¹)(COOR²) (I)

verwendet, wobei R¹ = H oder CH₃ und R² = H oder lineare, verzweigte oder ringförmige, gesättigte oder ungesättigte Alkylreste mit 1 bis 30, insbesondere mit 4 bis 18 Kohlenstoffatomen darstellt.

Monomere, die sehr bevorzugt im Sinne der allgemeinen Struktur (I) eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere, wie z. B. 2-Ethylhexylacrylat und isoOctylacrylat sowie cyclische Monomere wie z. B. Cyclohexyl- oder Norbornylacrylat und Isobornylacrylat.

Ebenfalls einsetzbar als Monomere sind Acryl- und Methacrylsäureester, die aromatische Reste enthalten, wie z. B. Phenylacrylat, Benzylacrylat, Benzoinacrylat, Phenylmethacrylat, Benzylmethacrylat oder Benzoinmethacrylat.

Weiterhin können optional Vinylmonomere aus den folgenden Gruppen eingesetzt werden: Vinylester, Vinylether, Vinylhalogenide, Vinylidenhalogenide, sowie Vinylverbindungen, die aromatische Zyklen oder Heterozyklen in α-Stellung enthalten. Für die optional einsetzbaren Vinylmonomere seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril, Styrol und α-Methylstyrol.

Weitere erfindungsgemäß einsetzbare Monomere sind Glycidylmethacrylat, Glycidylacrylat, Allylglycidylether, 2-Hydroxyethylmethacrylat, 2-Hydroxyethylacrylat, 3-Hydroxypropylmethacrylat, 3-Hydroxypropylacrylat, 4-Hydroxybutylmethacrylat, 4-Hydroxybutylacrylat, Acrylsäure, Methacrylsäure, Itaconsäure und deren Ester, Crotonsäure und deren Ester, Maleinsäure und deren Ester, Fumarsäure und deren Ester, Maleinsäureanhydrid, Methacrylamid sowie N-alkylierte Derivate, Acrylamid sowie N-alkylierte Derivate, N -Methylolmethacrylamid, N-Methylolacrylamid, Vinylalkohol, 2-Hydroxyethylvinylether, 3-Hydroxypropylvinylether und 4-Hydroxybutylvinylether.

Bei Kautschuk oder Synthesekautschuk als Ausgangsmaterial für die Haftklebemasse sind weitere Variationsmöglichkeiten gegeben, sei es aus der Gruppe der Naturkautschuke oder der Synthesekautschuke oder sei es aus einem beliebigen Verschnitt aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylat-Kautschuke (ACM), der Ethylenvinylacetat-Copolymere (EVA) und der Polyurethane und/oder deren Verschnitten gewählt werden können.

Weiterhin können Kautschuken zur Verbesserung der Verarbeitbarkeit vorzugsweise thermoplastische Elastomere mit einem Gewichtsanteil von 10 bis 50 Gew.-% bezogen auf den Gesamtelastomeranteil zugesetzt werden. Stellvertretend seien an dieser Stelle vor allem die besonders verträglichen Typen Polystyrol-Polyisopren-Polystyrol (SIS) und Polystyrol-Polybutadien-Polystyrol (SBS) genannt.

Ebenfalls vorteilhaft einsetzbar als Grundmaterialien für Klebeschichten sind Blockcopolymere. Dabei sind einzelne Polymerblöcke kovalent miteinander verknüpft. Die Blockverknüpfung kann in einer linearen Form vorliegen, aber auch in einer sternförmigen oder Pfropfcopolymervariante. Ein Beispiel für ein vorteilhaft einsatzbares Blockcopolymer ist ein lineares Triblockcopolymer, dessen zwei endständigen Blöcke eine Erweichungstemperatur von mindestens 40 °C, bevorzugt mindestens 70 °C aufweisen und dessen Mittelblock einer Erweichungstemperatur von höchstens 0 °C, bevorzugt höchstens -30 °C aufweist. Höhere Blockcopolymere, etwa Tetrablockcopolymere sind ebenfalls einsetzbar. Wichtig ist, dass zumindest zwei Polymerblöcke gleicher oder verschiedener Art im Blockcopolymer enthalten sind, die eine Erweichungstemperatur jeweils von mindestens 40 °C, bevorzugt mindestens 70 °C aufweisen und die über zumindest einen Polymerblock mit einer Erweichungstemperatur von höchstens 0 °C, bevorzugt höchstens -30 °C in der Polymerkette voneinander separiert sind. Beispiele für Polymerblöcke sind Polyether wie z. B. Polyethylenglykol, Polypropylenglykol oder Polytetrahydrofuran, Polydiene, wie z. B. Polybutadien oder Polyisopren, hydrierte Polydiene, wie z. B. Polyethylenbutylen oder Polyethylenpropylen, Polyester, wie z. B. Polyethylenterephthalat, Polybutandioladipat oder Polyhexandioladipat, Polycarbonat, Polycaprolacton, Polymerblöcke vinylaromatischer Monomere, wie z. B. Polystyrol oder Poly-α-Methylstyrol, Polyalkylvinylether, Polyvinylacetat, Polymerblöcke α,β-ungesättigter Ester wie insbesondere Acrylate oder Methacrylate. Dem Fachmann sind entsprechende Erweichungstemperaturen bekannt. Alternativ schlägt er sie beispielsweise im Polymer Handbook [J. Brandrup, E.H. Immergut, E.A. Grulke (Hrsg.), Polymer Handbook, 4. Aufl. 1999, Wiley, New York] nach. Polymerblöcke können aus Copolymeren aufgebaut sein.

Als optional einsetzbare klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen.

Als ebenfalls optional einsetzbare Weichmacher können alle aus der Selbstklebetechnologie bekannten weichmachenden Substanzen eingesetzt werden. Dazu zählen unter anderem die paraffinischen und naphthenischen Öle, (funktionalisierte) Oligomere wie Oligobutadiene und -isoprene, flüssige Nitrilkautschuke, flüssige Terpenharze, pflanzliche und tierische Fette und Öle, Phthalate und funktionalisierte Acrylate. Haftklebemassen, wie sie oben angegeben sind, können zudem weitere Bestandteile wie rheologisch wirksame Additive, Katalysatoren, Initiatoren, Stabilisatoren, Kompatibilisatoren, Kopplungsreagenzien, Vernetzer, Antioxidantien, weitere Alterungsschutzmittel, Lichtschutzmittel, Flammschutzmittel, Pigmente, Farbstoffe, Füllstoffe und/oder Blähmittel sowie optional Lösungsmittel enthalten.

Als Materialien, aus der die zumindest eine optional einsetzbare Trägerschicht aufgebaut ist, können zwei Klassen verwendet werden, dehnbare Schichten (Dehnbarkeit von mindestens 50%, bevorzugt mindestens 100 %, weiter bevorzugt größer 500 %) und nicht dehnbare Schichten. Nicht dehnbare Schichten oder Folien sind insbesondere dann im Sinne dieser Erfindung einsetzbar, wenn sie zum Beispiel auf Grund der Sprödigkeit der Trägermaterialien oder zum Beispiel auf Grund einer gesteuerten Trägerschädigung eine geringe Reißfestigkeit aufweisen, so dass sie, wenn das Sicherheitsetikett beim Ablösen verstreckt wird, reißt. In diesem Fall ist die Dehnbarkeit des Sicherheitsetiketts im Wesentlichen durch die Dehnbarkeit der Klebstoffschicht charakterisiert.

Zur Herstellung der Trägerfolie werden filmbildende oder extrusionsfähige Polymere eingesetzt. In einer bevorzugten Auslegung werden Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern, wie z. B. die Erweichungstemperatur und/oder die Reißfestigkeit.

In einer weiteren bevorzugten Auslegung dieser Erfindung werden Polyvinylacetate eingesetzt. Polyvinylacetate können neben Vinylacetat auch Vinylalkohol als Comonomer enthalten, wobei der freie Alkoholanteil in weiten Grenzen variiert werden kann. In einer weiteren bevorzugten Auslegung dieser Erfindung werden Polyester als Trägerfolie eingesetzt. In einer besonders bevorzugten Auslegung dieser Erfindung werden Polyester auf Basis von Polyethylenterephthalat (PET) eingesetzt. In einer weiteren bevorzugten Auslegung dieser Erfindung werden Polyvinylchloride (PVC) als Trägerfolie eingesetzt. Zur Steigerung der Temperaturstabilität können die in diesen Folien enthaltenen Polymerbestandteile unter Verwendung versteifender Comonomere hergestellt werden. Weiterhin können die Folien im Zuge des erfinderischen Prozesses strahlenvernetzt werden, um eine ebensolche Eigenschaftsverbesserung zu erhalten. Kommt PVC als Folienrohstoff zum Einsatz, kann es optional plastifizierende Komponenten enthalten (Weichmacher). In einer weiteren bevorzugten Auslegung dieser Erfindung werden Polyamide zur Herstellung von Folien eingesetzt. Die Polyamide können aus einer Dicarbonsäure und einem Diamin oder aus mehreren Dicarbonsäuren und Diaminen bestehen. Neben Dicarbonsäuren und Diaminen lassen sich auch höher funktionelle Carbonsäuren und Amine auch in Kombination mit den oben genannten Dicarbonsäuren und Diaminen einsetzen. Zur Versteifung der Folie werden bevorzugt zyklische, aromatische oder heteroaromatische Ausgangsmonomere eingesetzt. In einer weiteren bevorzugten Auslegung dieser Erfindung werden Polymethacrylate zur Herstellung von Folien eingesetzt. Hier kann durch die Wahl der Monomere (Methacrylate und z. T. auch Acrylate) die Glasübergangstemperatur der Folie gesteuert werden. Weiterhin können die Polymethacrylate auch Additive enthalten, um z. B. die Flexibilität der Folie zu erhöhen oder die Glasübergangstemperatur herab- oder heraufzusetzen oder die Ausbildung von kristallinen Segmenten zu minimieren. In einer weiteren bevorzugten Auslegung dieser Erfindung werden Polycarbonate zur Herstellung von Folien eingesetzt. Ferner können in einer weiteren Auslegung dieser Erfindung auf Vinylaromaten und Vinylheteroaromaten basierende Polymere und Copolymere zur Herstellung der Trägerfolie eingesetzt werden.

Als Ausgangsmaterialien für dehnbare Trägerschichten bieten sich besonders Polyolefine an. Bevorzugte Polyolefine werden auch hier aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern, wie z. B. die Erweichungstemperatur und/oder die Dehnbarkeit. Ferner lassen sich Polyurethane vorteilhaft als Ausgangsmaterialien für dehnbare Trägerschichten verwenden. Polyurethane sind chemisch und/oder physikalisch vernetzte Polykondensate, die typischerweise aus Polyolen und Isocyanaten aufgebaut werden. Je nach Art und Einsatzverhältnis der einzelnen Komponenten sind dehnbare Materialien erhältlich, die im Sinne dieser Erfindung vorteilhaft eingesetzt werden können. Rohstoffe, die dem Formulierer hierzu zur Verfügung stehen, sind zum Beispiel in EP 894 841 B1 und EP 1 308 492 B1 genannt. Dem Fachmann sind weitere Rohstoffe bekannt, aus denen erfindungsgemäße Trägerschichten aufgebaut werden können. Weiterhin ist es vorteilhaft, Kautschuk-basierende Materialien in Trägerschichten einzusetzen, um Dehnbarkeit zu realisieren. Als Kautschuk oder Synthesekautschuk oder daraus erzeugten Verschnitten als Ausgangsmaterial für dehnbare Trägerschichten kann der Naturkautschuk grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylat-Kautschuke (ACM), der Ethylenvinylacetat-Copolymere (EVA) und der Polyurethane und/oder deren Verschnitten gewählt werden.

Besonders vorteilhaft einsetzbar als Materialien für dehnbare Trägerschichten sind Blockcopolymere. Dabei sind einzelne Polymerblöcke kovalent miteinander verknüpft. Die Blockverknüpfung kann in einer linearen Form vorliegen, aber auch in einer sternförmigen oder Pfropfcopolymervariante. Ein Beispiel für ein vorteilhaft einsatzbares Blockcopolymer ist ein lineares Triblockcopolymer, dessen zwei endständige Blöcke eine Erweichungstemperatur von mindestens 40 °C, bevorzugt mindestens 70 °C aufweisen und dessen Mittelblock einer Erweichungstemperatur von höchstens 0 °C, bevorzugt höchstens -30 °C aufweist. Höhere Blockcopolymere, etwa Tetrablockcopolymere sind ebenfalls einsetzbar. Wichtig ist, dass zumindest zwei Polymerblöcke gleicher oder verschiedener Art im Blockcopolymer enthalten sind, die eine Erweichungstemperatur jeweils von mindestens 40 °C, bevorzugt mindestens 70 °C aufweisen und die über zumindest einen Polymerblock mit einer Erweichungstemperatur von höchstens 0 °C, bevorzugt höchstens -30 °C in der Polymerkette voneinander separiert sind. Beispiele für Polymerblöcke sind Polyether wie z. B. Polyethylenglykol, Polypropylenglykol oder Polytetrahydrofuran, Polydiene, wie z. B. Polybutadien oder Polyisopren, hydrierte Polydiene, wie z. B. Polyethylenbutylen oder Polyethylenpropylen, Polyester, wie z. B. Polyethylenterephthalat, Polybutandioladipat oder Polyhexandioladipat, Polycarbonat, Polycaprolacton, Polymerblöcke vinylaromatischer Monomere, wie z. B. Polystyrol oder Poly-α-Methylstyrol, Polyalkylvinylether, Polyvinylacetat, Polymerblöcke α,β-ungesättigter Ester wie insbesondere Acrylate oder Methacrylate. Dem Fachmann sind entsprechende Erweichungstemperaturen bekannt. Alternativ schlägt er sie beispielsweise im Polymer Handbook [J. Brandrup, E.H. Immergut, E.A. Grulke (Hrsg.), Polymer Handbook, 4. Aufl. 1999, Wiley, New York] nach. Polymerblöcke können aus Copolymeren aufgebaut sein.

Zur Herstellung eines Trägermaterials kann es auch hier angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Trägermaterialien können entsprechend dem Stand der Technik vorbehandelt sein, also beispielsweise einer chemischen und/oder physikalischen Vorbehandlung unterzogen worden sein. Eine Corona- oder Plasmavorbehandlung ist hier zum Beispiel denkbar.

Die Nachweisschicht, die das optische Merkmal aufweist, das unter Verstreckung sein Erscheinungsbild ändert, ist, wenn sie die oberste Schicht im Etikettenverbund darstellt, nichtklebrig ausgestaltet. Sie kann als Bedruckung, auch als Mehrfachbedruckung, wobei einzelne Druckelemente vollflächig andere partiell ausgestaltet sein können, oder als Prägefolie wie zum Beispiel eine Heißprägefolie realisiert sein. Optische Merkmale, die unter Verstreckung ihr Erscheinungsbild ändern, können auch in verschiedenen Schichten in das erfindungsgemäße Sicherheitsetikett eingebracht sein. Es ist auch möglich, dass sich ein optisches Merkmal aus in unterschiedlichen Schichten befindlichen Einzelmerkmalen zusammensetzt.

Optional können weitere Schichten zur Anwendung kommen, die so ausgewählt sein können, dass sie zusätzliche Funktionen in das Sicherheitsetikett einbringen, aber im Wesentlichen nicht zu einer Änderung des Zug/Dehungs-Verhaltens des Etiketts führen. Beispiele für solche optional einsetzbaren Schichten können Primer-, Trenn- oder Barriereschichten sein. Besonders Primer- und Trennschichten können in vollflächiger oder partieller Gestalt zum Einsatz kommen.

In denjenigen Etikettenaufbauten, die keine zusätzliche Trägerschicht enthalten, ist die Klebeschicht so ausgewählt, dass sie im Gesamtverbund zu den erfindungsgemäßen mechanischen Eigenschaften führt. Die Schichtdicke der Klebeschicht liegt in diesem Fall überlicherweise zwischen 15 µm und 1000 µm, bevorzugt zwischen 50 µm und 500 µm. In denjenigen Etikettenaufbauten, die eine zusätzliche Trägerschicht enthalten, beträgt die Schichtdicke der Klebeschicht zwischen 5 µm und 1000 µm, bevorzugt zwischen 15 µm und 500 µm. Die Trägerschicht weist dann üblicherweise eine Schichtdicke von 5 µm bis 1000 µm auf.

Zur Herstellung eines erfindungsgemäß einsetzbaren Liners können, sofern es sich um einen folienbasierenden handelt, prinzipiell alle filmbildenden und extrusionsfähigen Polymere eingesetzt werden. Die Releasefolie (Liner) besteht aus einer Trägerfolie, die ein- oder beidseitig mit einem Releaselack, der bevorzugt auf Silikon basiert, ausgestattet ist. Bei beidseitig mit Releaselack ausgestatteten Linern sind die Releaselacke bevorzugt abgestuft, d. h. die Trennwerte unterscheiden sich auf der oberen und unteren Seite. In einer bevorzugten Auslegung dieser Erfindung werden als Trägermaterial für die Releasefolie Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Polyester basierende Folienliner sind ebenfalls vorteilhaft einsetzbar.

Weiterhin kommen diverse Papiere, optional auch in Kombination mit einer stabilisierenden Extrusionsbeschichtung, als Trägermaterial für Releasematerialien in Frage. Alle genannten Release-Träger erhalten durch einen oder mehrere Beschichtungsgänge beispielsweise mit einem Silikon-basierenden Release, ihre antiadhäsiven Eigenschaften. Der Auftrag kann dabei ein- oder beidseitig erfolgen.

Muss die Klebeschicht die mechanischen Anforderungen, die an das Sicherheitsetikett im Sinne dieser Erfindung gestellt werden, erfüllen, dann kommen bevorzugt Kautschuk-basierende Systeme oder Blockcopolymer-basierende Systeme zum Einsatz.

Die Gesamtdicke der Sicherheitsetiketten ohne Liner sollte zwischen 25 µm und 1500 µm liegen, bevorzugt zwischen 35 µm und 500 µm. Kommt eine Trägerschicht zum Einsatz, dann ist es vorteilhaft, wenn Schichtdicke der Klebeschicht und Schichtdicke der Trägerschicht von der Größenordnung her ähnlich sind (Variante A: Schichtdickenverhältnis Klebeschicht zu Trägerschicht von etwa 25:75 bis etwa 75:25). Ebenfalls vorteilhaft ist es, wenn die Schichtdicke der Klebeschicht wesentlich höher ist als die der Trägerschicht (Variante B: etwa 85:15 bis etwa 95:5). Es ist zudem erfindungsgemäß, wenn die Schichtdicke der Klebeschicht wesentlich geringer ist als die Schichtdicke der Trägerschicht (Variante C: etwa 10:90 bis etwa 25:75). Alle übrigen Schichtdickenverhältnisse sind natürlich ebenfalls erfindungsgemäß. In Variante A sind Klebeschicht und Trägerschicht bevorzugt so ausgewählt, dass sie beide für sich im Wesentlichen den erfindungsgemäßen Kriterien der mechanischen Eigenschaften entsprechen. In Variante B trägt vor allem die Klebeschicht zu den mechanischen Etiketteneigenschaften bei. Die Trägerschicht muss den erfindungsgemäßen Kriterien für sich genommen nicht entsprechen. Es ist beispielsweise vorstellbar, dass die Trägerschicht nicht die Dehnbarkeit der Klebeschicht aufweist und auf Grund einer ausreichend geringen Reißfestigkeit dann unter Dehnung reißt. In Variante C tragen die mechanischen Eigenschaften der Trägerschicht hauptsächlich zu den mechanischen Eigenschaften des Etiketts bei. Die Klebeschicht braucht in diesem Fall keine besonders hohe Dehnbarkeit oder Reißfestigkeit aufzuweisen.

Um einen möglichst weiten Einsatzbereich des Sicherheitsetiketts zu ermöglichen insbesondere auch einen Einsatz auf dem Gebiet der Catering-Logistik, kann dieses in einer sehr vorteilhaften Auslegungsform derart ausgebildet sein , dass es auch bei extremen Temperaturen verwendbar ist. Insbesondere ist das Sicherheitsetikett auch bei Temperaturen bis etwa -50 °C, vorzugsweise bis etwa -30 °C verwendbar, behält also die erfindungswesentlichen Eigenschaften bei. Eine Temperaturobergrenze für derartige Sicherheitsetiketten wird in der Regel durch die Kohäsion der Klebeschicht und/oder etwaiger Trägerschichten definiert. Ferner ist das Sicherheitsetikett vorzugsweise derart ausgebildet, dass es auch bei Temperaturen bis etwa 100 °C, vorzugsweise bis etwa 60 °C verwendbar ist.

Das optische Merkmal der Nachweisschicht dient dazu, ein Ablösen des Sicherheitsetiketts von dem Gegenstand, auch bereits ein teilweises Ablösen, irreversibel anzuzeigen. Dies wird dadurch realisiert, dass beim Ablösen des Sicherheitsetiketts eine Veränderung des Erscheinungsbildes eintritt, sich das Erscheinungsbild nach Erstverklebung im Vergleich zum Erscheinungsbild nach einer Ablösung unter Verstreckung also unterscheidet. Eine solche Änderung des Erscheinungsbildes kann beispielsweise darin liegen, dass das Erscheinungsbild zunächst glänzend ist, und sich beim Ablösen in ein mattes Erscheinungsbild wandelt. Eine solche Umwandlung kann beispielsweise durch das Verstrecken mit einer nur teilweisen Rückstellung erfolgen. Eine Alternative besteht darin, dass das optische Merkmal derart ausgebildet ist, dass nach einer Ablösung unter Verstreckung ein andersfarbiges Erscheinungsbild sichtbar ist. Dies kann beispielsweise dadurch erzielt werden, dass unterschiedliche Bereiche des Sicherheitsetiketts zunächst unterschiedliche Farben aufweisen, die sich dann beim Verstrecken miteinander mischen.

Ferner kann das optische Merkmal als Hologramm ausgebildet sein, insbesondere als ein Prägehologramm. Nach Verstreckung wird durch die Ausdehnung der Hologrammfläche der Kontrast und/oder die Brillanz des Hologramms geringer als bei Erstverklebung. Dadurch ist auch in diesem Fall ein Ablösen unter Verstreckung ohne Hilfsmittel erkennbar.

Eine weitere Möglichkeit besteht darin, dass das optische Merkmal als graphisches Muster ausgebildet ist. Das graphische Muster ist nach Verstreckung erkennbar anders und dient damit als Erstöffnungsindikator. Hierzu kann das graphische Muster beispielsweise Linien aufweisen, die nach Verstreckung einen anderen Verlauf und/oder eine andere Ausrichtung aufweisen.

Erfindungsgemäß können auch Kombination mehrerer optischer Merkmale, die sich unter Dehnung erkennbar ändern und nach einem Ablösen des Sicherheitsetiketts nicht mehr im ursprünglichen Erscheinungsbild vorliegen, erfindungsgemäß vorteilhaft zum Einsatz kommen.

Weiter kann das Sicherheitsetikett so ausgebildet sein, dass es eine Speicherschicht aufweist, in die Information einbringbar ist. Bei der Speicherschicht kann es sich um eine zusätzliche Schicht handeln. Die Speicherschicht kann aber beispielsweise auch durch eine weitere Schicht, wie eine Trägerschicht des Sicherheitsetiketts gebildet werden. Die Einbringung der Information kann beispielsweise durch Bedruckung der Speicherschicht, Prägung, Einschreiben mittels eines Lasers oder dergleichen erfolgen.

Das erfindungsgemäße Sicherheitsetikett eignet sich insbesondere zur Versiegelung von Türen, wie Klapptüren, Schiebetüren, Flügeltüren, Fenstern, Behältern mit Deckeln oder dergleichen. Insbesondere ist es so ausgestaltet, dass es zum Versiegeln von Verkehrsmitteln aller Art verwendet werden kann, also auch den entsprechenden bei diesem Anwendungsgebiet auftretenden Witterungseinflüssen Stand hält, sowie eine Öffnung von innen einer von außen versiegelten Tür ermöglicht.

Weitere Einzelheiten, Merkmale, Ziele und Vorteile der vorliegenden Erfindung werden nachfolgend anhand einer Zeichnung bevorzugter Ausführungsbeispiele näher erläutert. In der Zeichnung zeigt:
- Fig. 1: den typischen Verlauf der Zug/Dehnungs-Kurve eines Sicherheitsetiketts,
- Fig. 2: in schematischer Darstellung den Ablösewinkel eines Sicherheitsetiketts ,
- Fig. 3: in schematischer Darstellung eine Seitenansicht des erfindungsgemäßen Sicherheitsetiketts auf einer Tür vor Erstöffnung,
- Fig. 4: das Sicherheitsetikett aus Fig. 3 bei Erstöffnung der Tür,
- Fig. 5: das Sicherheitsetikett gemäß Fig. 3 nach Erstöffnung der Tür,
- Fig. 6: das Sicherheitsetikett gemäß Fig. 4 beim Vorgang des Strippens,
- Fig.7: verschiedene alternative Ausgestaltungen von Anstanzungen eines Sicherheitsetiketts.

Fig. 1 zeigt einen typischen Verlauf einer Zug/Dehnungs-Kurve eines erfindungsgemäßen Sicherheitsetiketts 1. Im Bereich des Regime I steigt die Zugkraft mit wachsender Dehnung in etwa linear an, das heißt mit wachsender Kraft wird das Sicherheitsetikett 1 kontinuierlich gedehnt. Im Bereich des Regimes II ist die für eine weitere Dehnung des Sicherheitsetiketts 1 erforderliche Zugkraft nahezu konstant. Dieser Bereich ist für die maximale Dehnbarkeit des Sicherheitsetiketts 1 von besonderer Bedeutung. Im Bereich des Regimes III ist dann wieder eine wachsende Zugkraft für eine weitere Dehnung des Sicherheitsetiketts 1 erforderlich.

In Fig. 2 ist in schematischer Darstellung der Ablösewinkel, also der Winkel, unter dem ein erfindungsgemäßes Sicherheitsetikett 1 rückstandsfrei von dem Klebeuntergrund 2 (einem beliebigen Gegenstand) entfernbar ist, zum besseren Verständnis dargestellt. Um eine möglichst einfache Handhabung des Sicherheitsetiketts 1 zu ermöglichen, sollte der Ablösewinkel möglichst groß sein. Grenzen sind jedoch dadurch gesetzt, dass ein Verstrecken des Sicherheitsetiketts 1 möglich sein muss, ohne dass dieses reißt. Bei einem zu großen Ablösewinkel kann es jedoch aufgrund der dabei entstehenden Abknickung in dem Sicherheitsetikett 1 verbunden mit der Klebkraft an dem Gegenstand 2 zu einer zu starken Belastung an der Abknickung und damit zu einem Riss kommen. Das rückstandsfreie Entfernen von dem Gegenstand 2 durch Verstrecken des Sicherheitsetiketts 1 ist in bevorzugter Ausgestaltung, wie dargestellt, unter einem Winkel zwischen 0° und 90° möglich. Die aus dem Stand der Technik bekannten Klebebänder ermöglichen einen derart großen Winkel zum rückstandsfreien Ablösen in der Regel nicht, sondern üblicherweise nur zwischen 0° und bis zu 45°, wodurch die Handhabung des Sicherheitsetiketts beim Ablösen unnötig erschwert wird.

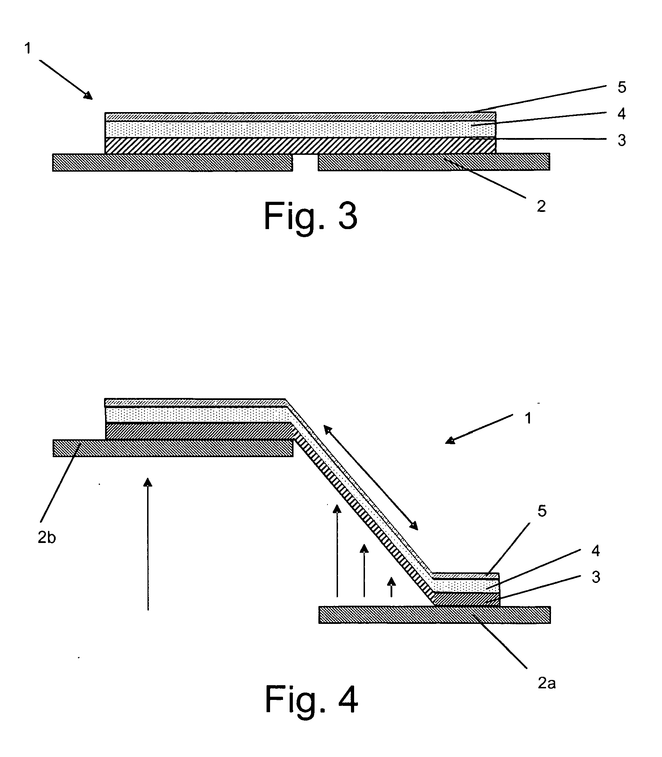

In Fig. 3 ist in schematischer Darstellung eine Seitenansicht eines erfindungsgemäßen Sicherheitsetiketts 1 gezeigt, dass auf einer Tür 2 aufgeklebt ist. Das Sicherheitsetikett 1 dient dabei als Erstöffnungsnachweis, es zeigt also an, ob die Tür 2, die hier aus zwei gegeneinander verschiebbaren Flügeln 2a, 2b besteht, nach Versiegelung mit dem Sicherheitsetikett 1 schon geöffnet wurde oder nicht.

Das Sicherheitsetikett 1 weist zunächst eine Klebeschicht 3 auf, mit der es auf den Türflügeln 2a, 2b aufgebracht ist. Die Klebeschicht 3 ist auf einem Träger 4 angeordnet, der hier als strukturbildende Schicht des Sicherheitsetiketts 1 dient und im Wesentlichen die physikalischen Eigenschaften des Sicherheitsetiketts 1 bestimmt. Auf dem Träger 4 ist sodann eine Nachweisschicht 5 angeordnet, die jedenfalls ein optisches Merkmal aufweist, das einen Ablöseversuch des Sicherheitsetiketts von der Tür 2 irreversibel anzeigt. Gegebenenfalls kann zudem eine Schutzschicht auf der Nachweisschicht oder weitere funktionelle Schichten vorgesehen sein. Auch kann es vorgesehen sein, dass mehrere Funktionen von nur einer Schicht bereitgestellt werden, die Anzahl der notwendigen Schichten ist daher variabel. Bezüglich der Ausgestaltungsmöglichkeiten des Schichtaufbaus und deren Zusammensetzung wird auf die allgemeine Beschreibung verwiesen.

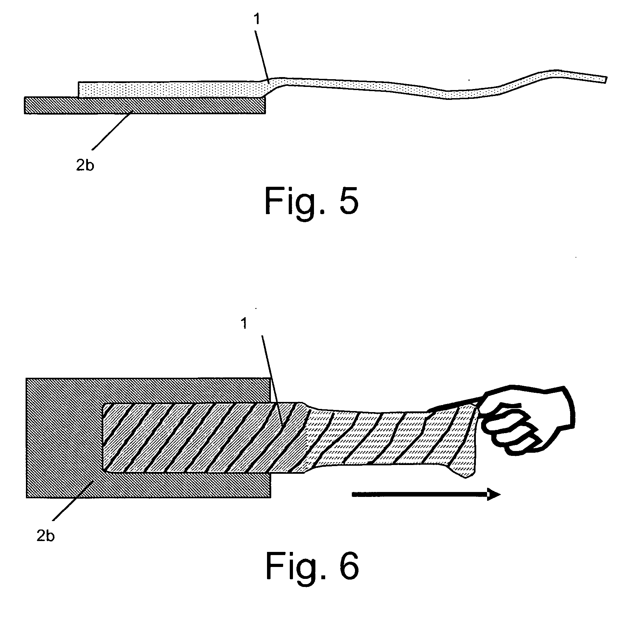

Erfolgt nun, wie es in Fig. 4 veranschaulicht ist, die Erstöffnung des Gegenstandes 2, hier also eine Verschiebung der beiden Türflügel 2a, 2b relativ zueinander, so wird das Sicherheitsetikett 1 bei dem Öffnungsvorgang verstreckt. Dabei beginnt sich das Sicherheitsetikett 1 unter Verstreckung zumindest von einem der beiden Türflügel 2a, 2b, hier aufgrund der Bewegungsrichtung tatsächlich auch nur von dem Türflügel 2a, zu lösen. Wenn die Tür 2 dann weit genug geöffnet ist, ist das Sicherheitsetikett 1 von dem einen Türflügel 2a restlos entfernt, während es an dem anderen Türflügel 2b noch anhaftet (Fig. 5). Der von dem Türflügel 2a abgelöste Teil des Sicherheitsetiketts 1 kann nun als Anfasser zum weiteren Entfernen des Sicherheitsetiketts 1 von dem Türflügel 2b dienen. Das Entfernen von dem Türflügel 2b erfolgt dann ebenfalls unter Verstreckung des Sicherheitsetiketts 1, indem es unter einem geeigneten Abziehwinkel gezogen wird (Fig. 6).

Insbesondere aus der Darstellung des Sicherheitsetiketts in Fig. 6 ist zudem die irreversible Änderung des Erscheinungsbildes des Sicherheitsetiketts 1 vor und nach dem Verstrecken ersichtlich. Vor dem Verstrecken (linke Hälfte des Sicherheitsetiketts 1) zeigt das Sicherheitsetikett 1 gerade verlaufende, durchgängige Linien. Eine Gruppe von Linien ist dicker ausgebildet, die zweite Gruppe von Linien dünner. Die Linien der beiden Gruppen verlaufen zudem unter einem deutlich erkennbaren Winkel zueinander. Nach dem Verstrecken (rechte Hälfte des Sicherheitsetiketts 1) sind die dickeren Linien zwar noch als durchgängige Linien erkennbar, ihr Verlauf ist jedoch nicht mehr geradlinig. Die dünneren Linien hingegen weisen Unterbrechungen auf, sind also nicht mehr durchgängig. Zudem treten nun Bereiche auf, in denen beide Gruppen von Linien im Wesentlichen parallel zueinander verlaufen, also auch in dieser Hinsicht ihre Anordnung verändert haben. Ferner ist bei einem Vergleich der Bereiche des Sicherheitsetiketts 1 vor und nach dem Verstrecken zu erkennen, dass sich das farbliche Erscheinungsbild verändert hat. Durch das Verstrecken ändert sich die Farbverteilung in dem Sicherheitsetikett 1. Vorliegend wird das Sicherheitsetikett 1 durch Verstrecken teiltransparent.

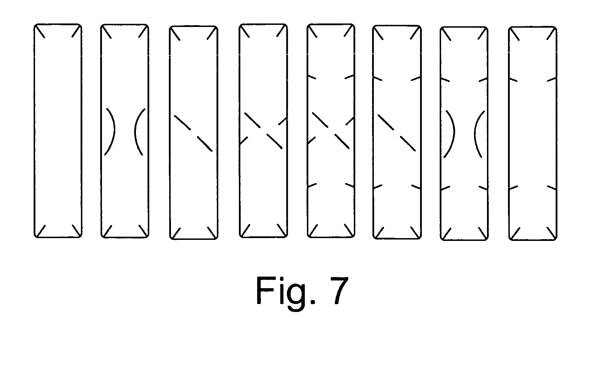

In Fig. 7 sind nun verschiedene Arten und Anordnungen von Anstanzungen eines Sicherheitsetiketts 1 gezeigt. Zunächst sind bei allen Sicherheitsetiketten 1 Anstanzungen am äußeren Rand vorgesehen, die einen unbefugten Ablöseversuch von dem Gegenstand 2 erschweren sollen. Das Sicherheitsetikett 1 soll vorzugsweise nur durch Öffnen des Gegenstandes 2 von diesem entfernbar sein.

Zudem sind verschiedene Arten und Formen von Anstanzungen im mittleren Bereich der Sicherheitsetiketten 1 vorgesehen. Diese Anstanzungen sind eine der zuvor beschriebenen Möglichkeiten, eine Sollbruchstelle auszubilden. Die Anstanzungen erstrecken sich dabei über einen größeren Bereich, so dass das Sicherheitsetikett 1 beim Aufkleben auf den Gegenstand 2 nicht hundertprozentig ausgerichtet werden muss und so die Handhabung möglichst einfach gestaltet ist.

Folgendes Gestaltungsbeispiel soll den erfinderischen Gedanken weiter plausibilisieren, wenn auch nicht einschränken.

Ein silikonisierter Liner wurde mit 12 µm einer Styrolblockcopolymer-basierenden Haftklebemasse, die 30 % eines Poyterpenharzes enthielt, beschichtet. Eine dehnbare, nichtklebrig eingestellte Trägerfolie, ebenfalls Styrolblockcopolymer-basierend, wurde der offenen Seite zukaschiert. Die Schichtdicke der Trägerfolie betrug 75 µm. Das Ballenmaterial wurde an einer Druckmaschine zunächst vollflächig weiß, dann vollfächig blau bedruckt. Schließlich wurden schwarze schräge Linien aufgedruckt. Das Material wurde zu Etiketten des Formats 22 mm x 99 mm gestanzt und ausgegittert. Muster dieser Etiketten wurden vom Liner abgelöst und in Zug/Dehnungs-Versuchen untersucht. Es wurden ein Young-Modul von etwa 16 MPa, ein Rückstellvermögen von 60% und eine Dehnbarkeit (maximale Dehnung) von 700% ermittelt. Weitere Muster dieses Etikettentyps wurden vom Liner abgelöst und auf Mehrwegfrachtcontainern aus Polypropylen verklebt. Die Frachtcontainer wiesen auf ihrer Oberseite zwei Verschlussklappen auf. Die Verklebung erfolgte so, dass das Sicherheitsetikett zur einen Hälfte auf der ersten Öffnungsklappe und mit der zweiten Hälfte auf der zweiten Öffnungsklappe verklebt war. Auf diese Weise wurde der Container versiegelt. Bei einem Öffnungsversuch wurde das Sicherheitsetikett irreversibel verformt. Das optische Merkmal änderte zudem sein Erscheinungsbild und zwar dahingehend, dass die vor dem Strippen gerade verlaufenden Linien nach dem Strippen nicht mehr gerade verliefen und teilweise sogar unterbrochen waren. Zusätzlich schien die untere, weiße Schicht nach dem Strippen durch die blaue Schicht hindurch. Der Erstöffnungsversuch wurde also auf deutlich erkennbare Weise angezeigt. Um den Container komplett zu öffnen, wurde das Sicherheitsetikett durch Strippen abgelöst. Auf der Containeroberfläche waren nach Ablösen keine mit dem Auge erkennbaren Rückstände erkennbar.

## Patentansprüche

1. Sicherheitsetikett (1) zur Verwendung als Erstöffnungsnachweis eines Gegenstandes (2) mit einer Klebeschicht (3) zur Aufbringung auf dem Gegenstand und einer Nachweisschicht (5),
wobei die Nachweisschicht ein optisches Merkmal aufweist, das einen Ablöseversuch von dem Gegenstand irreversibel anzeigt,
wobei das Sicherheitsetikett eine Dehnbarkeit von mindestens 50 % aufweist und wobei dasselbe durch Verstrecken im Wesentlichen rückstandsfrei von dem Gegenstand entfernbar ist,
**dadurch gekennzeichnet,**
**dass** das Sicherheitsetikett eine Sollbruchstelle aufweist, an der das Sicherheitsetikett bei Erstöffnung in zwei Teile trennbar ist.

2. Sicherheitsetikett (1) nach Anspruch 1, **dadurch gekennzeichnet,**
**dass** die Sollbruchstelle durch eine Anstanzung und/oder Perforation ausgebildet ist.

3. Sicherheitsetikett (1) nach einem der vorhergehenden Ansprüche, **dadurch gekennzeichnet,**
**dass** das Sicherheitsetikett ausschließlich nach dem Bruch der Sollbruchstelle ausgehend von der Sollbruchstelle durch Verstrecken im Wesentlichen rückstandsfrei von dem Gegenstand (2) entfernbar ist.

4. Sicherheitsetiket (1) nach einem der vorhergehenden Ansprüche, **dadurch gekennzeichnet,**
**dass** dasselbe ein Rückstellvermögen von mindestens 30 %, vorzugsweise von mindestens 50 % aufweist.

5. Sicherheitsetikett (1) zur Verwendung als Erstöffnungsnachweis eines Gegenstandes (2) mit einer Klebeschicht (3) zur Aufbringung auf dem Gegenstand und einer Nachweisschicht (5),
wobei die Nachweisschicht ein optisches Merkmal aufweist, das einen Ablöseversuch von dem Gegenstand irreversibel anzeigt,
wobei das Sicherheitsetikett eine Dehnbarkeit von mindestens 50 % aufweist und wobei dasselbe durch Verstrecken im Wesentlichen rückstandsfrei von dem Gegenstand entfernbar ist,
wobei das Sicherheitsetikett durch das Öffnen des Gegenstandes verstreckbar und zumindest an einer Seite (2a) von dem Gegenstand im Wesentlichen rückstandsfrei ablösbar ist,
**dadurch gekennzeichnet,**
**dass** dasselbe ein Rückstellvermögen von mindestens 50 % aufweist.

6. Sicherheitsetikett (1) nach einem der vorhergehenden Ansprüche, **dadurch gekennzeichnet,**
**dass** dasselbe durch Verstrecken unter einem Winkel zwischen 0° und 90° im Wesentlichen rückstandsfrei von dem Gegenstand (2) entfernbar ist.

7. Sicherheitsetikett (1) nach einem der vorhergehenden Ansprüche, **dadurch gekennzeichnet,**
**dass** dasselbe eine Dehnbarkeit von mindestens 100 %, vorzugsweise von mindestens 500 % aufweist.

8. Sicherheitsetikett (1) nach einem der vorhergehenden Ansprüche, **dadurch gekennzeichnet,**
**dass** dasselbe ein Young-Modul kleiner etwa 100 MPa, vorzugsweise kleiner etwa 50 MPa, weiter vorzugsweise kleiner etwa 20 MPa, insbesondere kleiner etwa 15 MPa aufweist oder
**dass** dasselbe ein Young-Modul größer etwa 300 MPa, vorzugsweise größer etwa 400 MPa, weiter vorzugsweise größer etwa 500 MPa aufweist.

9. Sicherheitsetikett (1) nach einem der vorhergehenden Ansprüche, **dadurch gekennzeichnet,**
**dass** das optische Merkmal derart ausgebildet ist, dass nach Erstverklebung ein glänzendes Erscheinungsbild und nach Verstreckung ein mattes Erscheinungsbild vorliegt.

10. Sicherheitsetikett (1) nach einem der vorhergehenden Ansprüche, **dadurch gekennzeichnet,**
**dass** das optische Merkmal derart ausgebildet ist, dass nach Verstreckung ein andersfarbiges Erscheinungsbild sichtbar ist.

11. Sicherheitsetikett (1) nach einem der vorhergehenden Ansprüche, **dadurch gekennzeichnet,**
**dass** das optische Merkmal als grafisches Muster, insbesondere mit Linien, ausgebildet ist und dass das grafische Muster nach Verstreckung erkennbar anders ist, insbesondere die Linien einen anderen Verlauf und/oder eine andere Ausrichtung aufweisen.

12. Sicherheitsetikett (1) nach einem der vorhergehenden Ansprüche, **dadurch gekennzeichnet,**
**dass** die Nachweisschicht (5) dehnbar ist und/oder
**dass** zusätzlich zur Nachweisschicht eine Trägerschicht (4) vorgesehen ist, die, vorzugsweise, dehnbar ist.

13. Verfahren zum rückstandsfreien Ablösen eines Sicherheitsetiketts (1) von einem mit einem Sicherheitsetikett gesicherten Gegenstand (2),
wobei das Sicherheitsetikett gemäß einem der Ansprüche 1 bis 4 ausgebildet ist,
bei dem der Gegenstand geöffnet wird,
bei dem das Sicherheitsetikett durch den Öffnungsvorgang in zwei Teile getrennt wird und
bei dem jeder einzelnen Teil durch Verstrecken, vorzugsweise von der Sollbruchstelle aus, im Wesentlichen rückstandsfrei abgelöst wird.

## Claims

1. Security label (1) for use as a detector of first-time opening of an article (2), having an adhesive layer (3) for application to the article, and a detection layer (5),
the detection layer having an optical feature which irreversibly indicates an attempt at detachment from the article,
the security label having an extensibility of at least 50% and being removable substantially without residue from the article by stretching, **characterized**
**in that** the security label has a predetermined breakage point at which the security label can be divided into two parts on first-time opening.

2. Security label (1) according to Claim 1, **characterized in that** the predetermined breakage point is formed by kiss-cutting and/or perforation.

3. Security label (1) according to either of the preceding claims, **characterized in that** the security label is removable substantially without residue from the article (2) by stretching, starting from the predetermined breakage point, exclusively after the breakage of the predetermined breakage point.

4. Security label (1) according to any one of the preceding claims, **characterized in that** it has a resilience of at least 30%, preferably of at least 50%.

5. Security label (1) for use as a detector of first-time opening of an article (2), having an adhesive layer (3) for application to the article, and a detection layer (5),
the detection layer having an optical feature which irreversibly indicates an attempt at detachment from the article,
the security label having an extensibility of at least 50% and being removable substantially without residue from the article by stretching, the security label, by virtue of the opening of the article, being stretchable and being detachable substantially without residue from the article at least on one side (2a),
**characterized**
**in that** it has a resilience of at least 50%.

6. Security label (1) according to any one of the preceding claims, **characterized in that** it is removable substantially without residue from the article (2) by stretching at an angle between 0° and 90°.

7. Security label (1) according to any one of the preceding claims, **characterized in that** it has an extensibility of at least 100%, preferably of at least 500%.

8. Security label (1) according to any one of the preceding claims, **characterized in that** it has a Young's modulus of less than about 100 MPa, preferably less than about 50 MPa, more preferably less than about 20 MPa, more particularly less than about 15 MPa, or **in that** it has a Young's modulus of greater than about 300 MPa, preferably greater than about 400 MPa, more preferably greater than about 500 MPa.

9. Security label (1) according to any one of the preceding claims, **characterized in that** the optical feature is designed such that the appearance after first-time adhesive bonding is glossy and the appearance after stretching is matt.

10. Security label (1) according to any one of the preceding claims, **characterized in that** the optical feature is designed such that a different-coloured appearance is visible after stretching.

11. Security label (1) according to any one of the preceding claims, **characterized in that** the optical feature is designed as a graphic pattern, more particularly with lines, and **in that** the graphic pattern after stretching is recognizably different: more particularly, the lines have a different course and/or a different orientation.

12. Security label (1) according to any one of the preceding claims, **characterized in that** the detection layer (5) is extensible and/or **in that** in addition to the detection layer there is a backing layer (4) which, preferably, is extensible.

13. Method of detaching a security label (1) without residue from an article (2) secured with a security label,
the security label being designed in accordance with any one of Claims 1 to 4,
wherein the article is opened,
wherein, as a result of the opening operation, the security label is divided into two parts, and wherein each individual part is detached substantially without residue by stretching, preferably starting from the predetermined breakage point.

## Revendications

1. Étiquette de sécurité (1) pour utilisation en tant que détection de la première ouverture d'un article (2), comportant une couche adhésive (3) destinée à l'application sur l'article et une couche de détection (5),
la couche de détection présentant un signe optique qui indique irréversiblement un essai d'enlèvement d'avec l'article,
l'étiquette de sécurité présentant une extensibilité d'au moins 50 % et pouvant être enlevée de l'article par tirage essentiellement sans résidu,
**caractérisée en ce que**
l'étiquette de sécurité comporte un point de rupture préétabli au niveau duquel l'étiquette de sécurité est séparable de deux parties lors de la première ouverture.

2. Étiquette de sécurité (1) selon la revendication 1, **caractérisée en ce que**
le point de rupture préétabli est réalisé par un découpage ou une perforation.

3. Étiquette de sécurité (1) selon l'une quelconque des revendications précédentes, **caractérisée en ce que**
l'étiquette de sécurité peut être enlevée de l'article (2) exclusivement après la rupture du point de rupture préétabli à partir du point de rupture préétabli, par tirage essentiellement sans résidu.

4. Étiquette de sécurité (1) selon l'une quelconque des revendications précédentes, **caractérisée en ce que** celle-ci présente une mémoire élastique d'au moins 30 %, de préférence d'au moins 50 %.

5. Étiquette de sécurité (1) pour utilisation en tant que détection de la première ouverture d'un article (2), comportant une couche adhésive (3) destinée à l'application sur l'article et une couche de détection (5),
la couche de détection présentant un signe optique qui indique irréversiblement un essai d'enlèvement d'avec l'article,
l'étiquette de sécurité présentant une extensibilité d'au moins 50 % et pouvant être enlevée de l'article par tirage essentiellement sans résidu,
l'étiquette de sécurité étant étirable par l'ouverture de l'article et détachable essentiellement sans résidu sur un côté (2a) de l'article,
**caractérisée en ce que**
celle-ci présente une mémoire élastique d'au moins 50 %.

6. Étiquette de sécurité (1) selon l'une quelconque des revendications précédentes, **caractérisée en ce que**
celle-ci peut être enlevée de l'article (2) essentiellement sans résidu par tirage sous un angle compris entre 0° et 90°.

7. Étiquette de sécurité (1) selon l'une quelconque des revendications précédentes, **caractérisée en ce que**
celle-ci présente une extensibilité d'au moins 100 %, de préférence d'au moins 500 %.

8. Étiquette de sécurité (1) selon l'une quelconque des revendications précédentes, **caractérisée en ce que**
celle-ci présente un module d'Young inférieur à environ 100 MPa, de préférence inférieur à environ 50 MPa, encore mieux inférieur à environ 20 MPa, en particulier inférieur à environ 15 MPa ou
**en ce que** celle-ci présente un module d'Young supérieur à environ 300 MPa, de préférence supérieur à environ 400 MPa, encore mieux supérieur à environ 500 MPa.

9. Étiquette de sécurité (1) selon l'une quelconque des revendications précédentes, **caractérisée en ce que**
le signe optique est conçu de manière que soit présent après premier collage un aspect brillant et après étirage un aspect mat.

10. Étiquette de sécurité (1) selon l'une quelconque des revendications précédentes, **caractérisée en ce que**
le signe optique est conçu de manière qu'un aspect coloré différemment soit visible après étirage.

11. Étiquette de sécurité (1) selon l'une quelconque des revendications précédentes, **caractérisée en ce que**
le signe optique est conçu sous forme de dessin graphique, en particulier à lignes, et **en ce qu'**après étirage le dessin graphique est différent de façon détectable, en particulier les lignes présentent un tracé différent et/ou une direction différente.

12. Étiquette de sécurité (1) selon l'une quelconque des revendications précédentes, **caractérisée en ce que**
la couche de détection (5) est extensible et/ou
**en ce qu'**en plus de la couche de détection est prévue une couche de support (4) qui, de préférence, est extensible.

13. Procédé pour l'enlèvement sans résidu d'une étiquette de sécurité (1) d'avec un article (2) protégé avec une étiquette de sécurité,
l'étiquette de sécurité étant constituée selon l'une quelconque des revendications 1 à 4,
dans lequel on ouvre l'article,
dans lequel l'étiquette de sécurité est séparée en deux parties par l'opération d'ouverture et
dans lequel chaque partie individuelle est détachée essentiellement sans résidu par tirage, de préférence à partir du point de rupture préétabli.
